# Europäisches Patentamt
## European Patent Office
## Office européen des brevets

(11) Veröffentlichungsnummer : **0 042 480**
**B1**

(12) **EUROPÄISCHE PATENTSCHRIFT**

(45) Veröffentlichungstag der Patentschrift :
09.01.85

(51) Int. Cl.⁴ : **F 16 H   1/22**, F 16 H   3/14

(21) Anmeldenummer : 81103207.7

(22) Anmeldetag : 29.04.81

(54) **Getriebe mit einem Antriebsritzel und zwei von diesem angetriebenen Getriebezügen.**

(30) Priorität : 21.06.80 DE 3023283

(43) Veröffentlichungstag der Anmeldung :
30.12.81 Patentblatt 81/52

(45) Bekanntmachung des Hinweises auf die Patenterteilung : 09.01.85 Patentblatt 85/02

(84) Benannte Vertragsstaaten :
CH FR GB LI NL SE

(56) Entgegenhaltungen :
AT-B-    61 042
CH-A-   236 082
CH-A-   343 733
CH-A-   423 393
DE-A- 1 814 897
DE-A- 2 724 783
DE-B- 1 223 649
DE-C-   483 026
DE-C-   878 140
GB-A-   190 972
US-A- 2 337 501

(73) Patentinhaber : **ZAHNRÄDERFABRIK RENK AKTIEN-
GESELLSCHAFT**
**Gögginger Strasse 71 - 83**
**D-8900 Augsburg (DE)**

(72) Erfinder : **Ernst, Jahnel**
**Sonthoferstrasse 6a**
**D-8900 Augsburg (DE)**

Jouve, 18, rue St-Denis, 75001 Paris, France

**Beschreibung**

Die Erfindung betrifft ein Getriebe mit einem Antriebsritzel und mindestens zwei von diesem angetriebenen Getriebezügen, die jeweils ein mit dem Antriebsritzel in Eingriff stehendes Zahnrad und eine schaltbare Kupplung enthalten und über diese Kupplungen ein gemeinsames Abtriebsrad antreiben, und mit einer Lagervorrichtung für das Antriebsritzel.

Solche Getriebe, jedoch ohne schaltbare Kupplungen, sind zum Antrieb von Schüsselmühlen bekannt. Die Getriebeantriebswelle bildet ein doppelschrägverzahntes Ritzel, dessen beide Einzelverzahnungen mit je einem einfachschrägverzahnten Stirnrad kämmen. Beide Stirnräder sind unabhängig voneinander gelagert und treiben je ein weiteres Ritzel, die beide in ein einziges Abtriebsrad eingreifen. Wenn die beiden Verzahnungen des doppelschrägverzahnten Ritzels mit gleichen Schrägungswinkeln und gegensinniger Schrägungsrichtungen ausgeführt sind und das Ritzel in axialer Richtung nicht geführt ist, wird sich bei der Einleitung eines Drehmomentes in dieses Ritzel eine Lastverteilung derart einstellen, daß jede Einzelverzahnung des Ritzels die Hälfte des eingeleiteten Drehmomentes überträgt. Das Ritzel hat in diesem Betriebszustand keine freie Axialkraft und seine axiale Position wird zwangsläufig durch den Eingriff in die beiden Stirnräder gegeben, deren Synchronlauf durch den Eingriff der Abtriebsritzel in das Abtriebsrad gegeben ist.

Je nach Verwendungszweck, insbesondere bei Schiffsgetrieben, kann es aus betrieblichen Gründen erforderlich werden, zwischen den mit dem Antriebsritzel kämmenden Stirnrädern und den mit dem Abtriebszahnrad kämmenden Zahnrädern schaltbare Kupplungen anzuordnen. Ferner kann es zur Bildung eines Wendegetriebes erforderlich werden, beide Getriebezweige in zwei Teilzweige mit unterschiedlichen Drehrichtungen aufzuteilen und jedem dieser Teilzweige eine schaltbare Kupplung anzuordnen.

Die Verwendung von schaltbaren Kupplungen in den Getriebezweigen ist jedoch bei der eingangs beschriebenen Getriebeart nicht ohne besondere Maßnahmen möglich.

Bei den bekannten Getrieben bestehen diese « besonderen Maßnahmen » darin, daß auf die Vorteile eines axial frei beweglichen, entgegengesetzt doppelschrägverzahnten Antriebsritzels weitgehend verzichtet wird. Solche bekannte Getriebe sind in der Zeitschrift « MTZ Motortechnische Zeitschrift 38 (1977) 11 », Seite 505, Bilder 8 und 9, dargestellt und beschrieben. Dabei handelt es sich um Wendegetriebe für Schiffe. Entsprechend der Ausführung nach Bild 8 mit zugehöriger Beschreibung auf Seite 505 sind die mit dem doppelschrägverzahnten Antriebsritzel in Eingriff stehenden Stirnräder ebenfalls doppelschrägverzahnt. Über die Lagerung des doppelschrägverzahnten Antriebsritzels ist nichts ausgesagt. Die beiden Getriebezweige sind jeweils in zwei Teilzweige unterteilt, die jeweils über schaltbare Reibkupplungen und doppelschrägverzahnte Abtriebsritzel ein gemeinsames, doppelschrägverzahntes Abtriebsrad antreiben. Beim Einschalten der Kupplungen ergeben sich in den beiden Getriebezweigen unterschiedliche Belastungen dann, wenn die beiden Schaltkupplungen infolge unterschiedlicher Reibwerte mit ungleichen Momenten den Synchronzustand erreichen. Eine andere bekannte Ausführungsform ist auf Seite 505 in Bild 9 dargestellt und beschrieben. Dabei ist das Antriebsritzel nur einfachschrägverzahnt. Mit ihm sind zwei ebenfalls nur einfachschrägverzahnte Stirnräder in Eingriff. Die durch die Schrägverzahnung entstehenden Axialkräfte müssen vollständig von Axiallagern aufgenommen werden. Wegen der Verwendung von Reibkupplungen ist auch hier nach dem Erreichen des Synchronzustandes eine ungleiche Drehmomentverteilung auf die beiden Getriebezweige unvermeidlich.

Kraftschlüssige Kupplungen, auch Reibungskupplungen oder Rutschkupplungen genannt, können wegen unterschiedlicher Reibungsverhältnisse ihren Synchronzustand (am Ende der Rutschphase) mit unterschiedlichen Drehmomenten erreichen. Dies bedeutet für die ganze Dauer des Betriebszustandes mit eingerückten Kupplungen eine unterschiedliche Lastverteilung mit entsprechend unterschiedlichen Belastungsspannungen in den beiden Getriebezweigen.

Ferner ist aus der US-A-2 337 501 ein Ritzel mit zwei entgegengesetzt schrägverzahnten Zahnkränzen bekannt, welches an beiden Enden in Radiallagern gelagert ist, deren Lagerringe in Lagergehäusen auf Hydraulikpolstern « schwimmen ». Die Hydraulikpolster der beiden Lager stehen miteinander in Strömungsverbindung und bewirken eine radiale Einstellung der Lagerringe in gleicher Richtung, jedoch mit geringerer Kraft als die Lagerkraft eines zwischen den Zahnkränzen angeordneten dritten Lagers. Damit wird auf das Ritzel ein Biegemoment ausgeübt, um seine Zähne in gleichmäßiger Anlage an den Zähnen von eingreifenden Zahnrädern zu halten. Außerdem zeigt die DE-C-483 026 in parallelen Getriebezügen angeordnete Axiallager, deren Lagerringe durch Hydraulikpolster abgestützt sind, damit die Zahnräder der parallelen Getriebezüge im Sinne eines Lastdruckausgleiches axial durch Änderung des Druckes der Hydraulikpolster eingestellt werden können.

Durch die Erfindung soll die Aufgabe gelöst werden, bei einem Getriebe der eingangs genannten Art in den Getriebezügen schaltbare Kupplungen zu verwenden, ohne daß in den Getriebezügen unterschiedliche Spannungen auftreten.

Diese Aufgabe wird gemäß der Erfindung durch die im Kennzeichen von Anspruch 1 angegebenen Merkmale gelöst.

Damit ist sichergestellt, daß das Ritzel und die mit ihm in Eingriff stehenden Zahnräder beim Öffnen einer der Kupplungen nicht undefiniert weit axial auseinanderlaufen und daß beim Schließen der Kupplungen in den Getriebezügen keine unterschiedlichen Spannungen auftreten.

Zur Erläuterung wird zunächst angenommen, daß es sich bei dem Lager um ein Axiallager handelt, jedoch beinhaltet die Erfindung auch Radiallager.

Betriebsphasen des Getriebes bei Verwendung von Reibungskupplungen :

1. Betrieb bei geöffneten Reibungskupplungen. Die Getriebeantriebswelle mit dem doppelschrägverzahnten Antriebsritzel ist durch das Axiallager mit normalem Axialspiel geführt.

2. Betrieb während der Rutschphase beim Schließen der Reibungskupplungen. Die Getriebeantriebswelle mit dem Antriebsritzel ist durch das Axiallager mit normalem Axialspiel geführt.

3. Betrieb mit geschlossenen Reibungskupplungen. Das Axiallager der Getriebeantriebswelle erhält jetzt ein so großes Axialspiel, daß diese Welle in axialer Richtung nur durch ihre beiden Zahneingriffe geführt wird. Da also keine Axialkraft auf das Lager übertragen wird, sind Zahnkräfte und Drehmomente der beiden Getriebezweige gleich groß.

Die Erfindung ermöglicht insbesondere die Verwendung von Reibungskupplungen. Solche Getriebe sind insbesondere als Schiffsantriebe vorteilhaft. Die Erfindung ermöglicht jedoch auch die Verwendung von formschlüssigen Kupplungen, weil bei großem Axialspiel des Axiallagers das doppelschrägverzahnte Antriebsritzel verschoben und dabei verdreht werden kann, womit gleichzeitig die antriebsseitigen Kupplungsteile gegenüber den abtriebsseitigen Kupplungsteilen verdreht werden können. Getriebe mit schaltbaren formschlüssigen Kupplungen sind in den Bildern 11 und 12 auf Seite 506 der genannten Zeitschrift « MTZ Motortechnische Zeitschrift 38 (1977) 11 » dargestellt.

Wenn in den Getriebezweigen schaltbare formschlüssige Kupplungen verwendet werden, dann wird im Normalfall die Kupplung des einen Getriebezweiges zuerst vollständig einrasten, während die andere Kupplung noch nicht eingerastet ist.

Die zweite Kupplung kann zunächst deshalb nicht einrasten, weil die Primärteile beider Kupplungen über das Antriebsritzel und die Sekundärteile über das Abtriebsrad synchron laufen. Wenn nunmehr die axiale Führung des Antriebsritzels aufgehoben wird, wird es bei weiterer Drehung des Antriebsritzels zu einer Axialverschiebung des Antriebsritzels unter gleichzeitiger Verdrehung des Primärteils der zweiten Kupplung kommen, was zum Schließen der zweiten Kupplung führt. Die gleiche Leistungsverzweigung auf beide Getriebezweige ist damit hergestellt.

Bei Verwendung von schaltbaren formschlüssigen Kupplungen ergeben sich somit folgende Betriebszustände :

1. Betrieb mit geöffneten formschlüssigen Kupplungen. Die Getriebeantriebswelle mit dem Antriebsritzel ist durch das Axiallager mit normalem Axialspiel geführt.

2. Einkuppelphase. Es wird normalerweise, weil exakte Synchronstellungen der Kupplungen selten vorliegen, zunächst nur die formschlüssige Kupplung des einen Getriebezweiges eingekuppelt, wobei die Getriebeantriebswelle mit dem Antriebsritzel durch das Axiallager mit normalen Axialspiel geführt wird.

3. Anschließend wird die Antriebswelle mit dem Antriebsritzel durch das Axiallager mit vergrößertem Axialspiel geführt. Das vergrößerte Axialspiel ist so bemessen, daß sich der Primärteil der noch zu schließenden anderen formschlüssigen Kupplung relativ zum Sekundärteil verdrehen kann. Dies wird dem Primärteil dadurch ermöglicht, daß nunmehr das Axiallager mit vergrößertem Axialspiel geführt wird und sich dadurch das doppelschrägverzahnte Antriebsritzel um einen entsprechenden Betrag axial verschieben kann, wobei infolge der Schrägverzahnung eine Relativdrehung des mit ihm in Eingriff stehenden einfachschrägverzahnten Stirnrades erfolgt.

Schaltbare formschlüssige Kupplungen, normalerweise Zahn- oder Klauenkupplungen, erlauben den geschilderten Einschaltvorgang nur bei stehender Anlage, wenn die Antriebswelle langsam gedreht wird. Werden selbstsynchronisierende schaltbare Zahnkupplungen verwendet, so können diese auch bei laufender Anlage eingeschaltet werden.

Weiter Merkmale der Erfindung ergeben sich aus den abhängigen Ansprüchen.

Eine Ausführungsform der Erfindung wird im folgenden mit Bezug auf Zeichnungen beschrieben. In diesen zeigen :

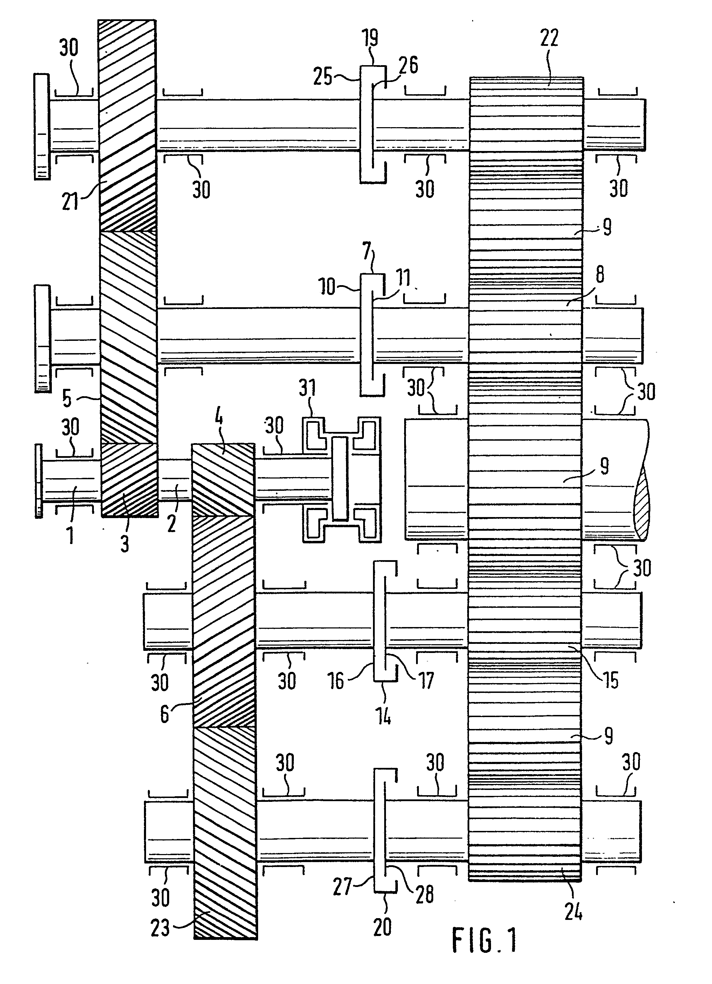

Figur 1   eine schematische Darstellung eines Schiffs-Wendegetriebes nach der Erfindung und

Figur 2   ein Axiallager des Getriebes nach Fig. 1,

Figur 3   eine schematische Draufsicht auf eine weitere Ausführung nach der Erfindung,

Figur 4   schematische Stirnansicht der weiteren Ausführung nach Fig. 3, und

Figur 5   eine Seitenansicht im Schnitt der Ausführung nach den Fig. 3 und 4.

Eine Antriebswelle 1 weist ein doppelschrägverzahntes Antriebsritzel 2 auf, dessen entgegengesetzt schrägverzahnte Einzelzahnkränze 3 und 4 je mit einem einfachschrägverzahnten Stirnrad 5 bzw. 6 in Eingriff stehen. Das Stirnrad 5 treibt über eine schaltbare Reibungskupplung 7 ein Abtriebsritzel 8, das mit einem Abtriebszahnrad 9 in Eingriff ist. Die beiden Zahnräder 5 und 8 mit der Kupplung 7 bilden zusammen einen Getriebezweig. Dessen Primärteil ist durch das Stirnrad 5 und die antriebsseitige Kupplungshälfte 10 der Kupplung 7 gebildet, und dessen Sekundärteil ist durch die abtriebsseitige Kupplungshälfte 11 der Kupplung 7 und das Abtriebsritzel 8 gebildet.

Ein weiterer Getriebezweig ist durch das andere Stirnrad 6 gebildet, welches über eine schaltbare Reibungskupplung 14 ein Abtriebsritzel 15 antreibt, welches ebenfalls mit dem Abtriebszahnrad 9 in Eingriff steht. Die Reibungskupplung 14 hat eine antriebsseitige Kupplungshälfte 16 und eine abtriebsseitige Kupplungshälfte 17.

Die beiden Getriebezweige 5, 7, 8 bzw. 6, 14, 15 treiben zusammen das Abtriebszahnrad 9 in einer bestimmten Drehrichtung an. Wenn das Abtriebszahnrad 9 in der entgegengesetzten Drehrichtung angetrieben werden soll, dann müssen die Kupplungen 7 und 14 geöffnet werden und statt dessen müssen schaltbare Reibungskupplungen 19 bzw. 20 geschlossen werden. Die Reibungskupplung 19 verbindet ein einfachschrägverzahntes Stirnrad 21 mit einem Abtriebsritzel 22. Das Stirnrad 21 ist mit dem Stirnrad 5 in Eingriff, und das Abtriebsritzel 22 ist mit dem Abtriebszahnrad 9 in Eingriff. In ähnlicher Weise verbindet die schaltbare Reibungskupplung 20 ein einfachschrägverzahntes Stirnrad 23, welches mit dem Stirnrad 6 in Eingriff steht, mit einem Abtriebsritzel 24, welches mit dem Abtriebszahnrad 9 in Eingriff ist. Die Kupplung 19 hat eine antriebsseitige Kupplungshälfte 25 und eine abtriebsseitige Kupplungshälfte 26. Die Kupplung 20 hat eine antriebsseitige Kupplungshälfte 27 und eine abtriebsseitige Kupplungshälfte 28.

Somit weist der mit dem Zahnkranz 3 des Antriebsritzels in Eingriff stehende Getriebezweig zwei Teilzweige auf, von denen der eine durch das Stirnrad 5, die Kupplung 7 und das Abtriebsritzel 8 gebildet ist, während der andere Teilzweig durch die beiden Stirnräder 5 und 21, die Kupplung 19 und das Abtriebsritzel 22 gebildet ist. In gleicher Weise hat der mit dem Zahnkranz 4 des Antriebsritzels in Eingriff stehende Getriebezweig zwei Teilzweige, von denen der eine durch das Stirnrad 6, die Kupplung 14 und das Abtriebsritzel 15 gebildet ist, während der andere teilzweig durch die Stirnräder 6 und 23, die Kupplung 20 und das Abtriebsritzel 24 gebildet ist.

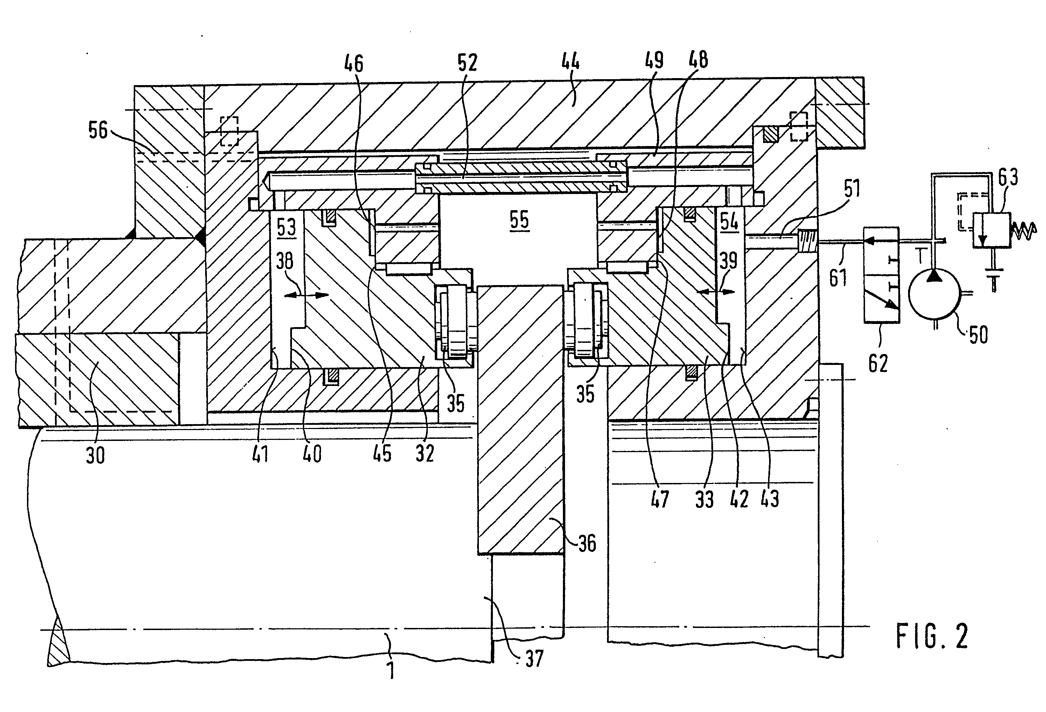

Mit 30 sind Lager der Zahnräder bzw. Ritzel und deren Wellen bezeichnet. Die Welle 1 des Antriebsritzels 2 ist zusätzlich zu Radiallagern 30 mit einem besonderen Axiallager 31 versehen, von welchem Einzelheiten in Fig. 2 vergrößert dargestellt sind. Bei dem Axiallager 31 handelt es sich um ein Gleitlager. Zwischen zwei axial verstellbaren, ringförmigen Lagerkolben 32 und 33 befinden sich Gleitlagersegmente 35. Diese sind zu beiden Seiten eines Gleitlagerringes 36 angeordnet, welcher auf dem Ende 37 der Welle 1 sitzt. Damit kann sich die Welle 1 des doppelschrägverzahnten Antriebsritzels 3, 4 so weit zusammen mit dem Gleitlagerring 36 axial verschieben, wie es der Abstand zwischen den beiden Lagerkolben 32 und 33 zuläßt. Die axiale Verstellbarkeit der Lagerkolben 32 und 33 ist durch Pfeile 38 bzw. 39 angedeutet. Das größte axiale Spiel ist dann gegeben, wenn der Lagerkolben 32 mit seinem Anschlag 40 an einer Anschlagfläche 41, und der Lagerkolben 33 mit seinem Anschlag 42 an einer Anschlagfläche 43 eines Lagergehäuses 44 anliegt. Das kleinste Axialspiel ist dann gegeben, wenn der Lagerkolben 32 mit seinem Anschlag 45 an einer Anschlagfläche 46 und der Lagerkolben 33 mit seinem Anschlag 47 an einer Anschlagfläche 48 eines mit dem Gehäuse 44 fest verbundenen Distanzstückes 49 anliegt. Dieses kleinste Axialspiel ist dann gegeben, wenn von einer äußeren Druckmittelquelle 50 Druckmittel über Leitungen 51 und 52 in axial außerhalb der Lagerkolben 32 und 33 gelegene Druckkammern 53 und 54 gefördert wird. Das genannte größte Axialspiel wird normalerweise nicht benützt. Wenn die äußeren Druckkammern 53 und 54 nicht mit Druckmittel beaufschlagt werden, dann drückt die Welle 1 über den Gleitlagerring 36 und die Lagersegmente 35 die Lagerkolben 32 und 33 auf ein bestimmtes Lagerspiel auseinander, welches dann dem sogenannten Betriebsspiel oder Betriebsabstand entspricht. Zwischen den Lagerkolben 32 und 33 befindet sich ein Entlüftungsraum 55 mit einer Entlüftungsleitung 56. In der zur Leitung 51 führenden Zuleitung 61 der Druckmittelquelle 50 befindet sich ein 2-Stellungs-3-Wege-Ventil 62 und ein Überdruckventil 63. Durch Umschalten des 2/3-Ventils 62 werden die Zylinder 53 und 54 drucklos. Das Überdruckventil 63 verhindert einen zu hohen Druckanstieg am Ausgang der Quelle 50, wenn das 2/3-Ventil 62 umgeschaltet wird. Die Ventilanschlüsse T führen zu einem nicht gezeichneten Tank.

Funktionsbeschreibung :

Das Axiallager 31 hat den in Fig. 2 gezeigten Betriebszustand, wenn die Kupplungen 7, 14, 19 und 20 bei lastenfreiem Leerlauf geöffnet sind und wenn die Kupplungen beim Kuppelvorgang rutschen. Dabei befindet sich in den äußeren Druckkammern 53 und 54 Druckmittel, so daß der Abstand zwischen den Lagerkolben 32 und 33 auf einem Minimalwert gehalten wird, der noch eine sichere Drehbewegung des Gleitlagerrings 36 ermöglicht. Damit wird den Primärteilen 5, 10 bzw. 5, 21, 25 bzw. 6, 16 bzw. 6, 23, 27 des Getriebes absoluter Synchronlauf aufgezwungen. Das dabei im Axiallager 31 vorhandene Minimalspiel kann auch als normales Axialspiel bezeichnet werden. Dabei liegen die Anschläge 45 und 47 der Lagerkolben 32 und 33 an den inneren Anschlagflächen 46 bzw. 48 des Distanzstücks 49 an.

Bei Betrieb mit vergrößertem Axialspiel wird die Pumpe 50 abgeschaltet und die Ölzufuhr auf drucklosen Ablauf geschaltet. Die axiale Verschiebung eines der beiden Lagerkolben 32 und 33 in eine von axialen Kräften freie Lage der Antriebswelle 1 geschieht durch diese Antriebswelle 1 selbst, und zwar so lange, bis eine gleichmäßige Lastverteilung auf alle Getriebezweige erreicht ist. Der betreffende Lagerkolben 32 bzw. 33 erreicht dabei noch nicht seine Endanschlagsfläche 41 bzw. 43. Das Axiallager wird erst dann wieder mit Drucköl beaufschlagt, wenn die Reibungskupplungen geöffnet sind.

Das Axiallager kann in anderer Ausführungsform selbstverständlich auch mit Wälzlagern versehen sein. Das genannte kleinste oder normale Axialspiel ist also jeweils bei geöffneten Reibungskupplungen und während der Rutschphase beim Schließen der Reibungskupplungen gegeben. Dagegen ist das Axiallager bei geschlossenen Reibungskupplungen auf vergrößertes Axialspiel eingestellt. Dieses vergrößerte Axialspiel ergibt sich nach folgender Überlegung :

Die Reibungskupplungen 7 und 14 bzw. 19 und 20 übertragen am Ende der Rutschphase unterschiedliche Drehmomente wegen der unvermeidbaren Reibwerttoleranzen, die sich in Form von Drehmomentschwingungen auswirken. Die Lastverteilung auf die einfachschrägverzahnten Stirnräder 5 und 6 ist daher ungleich und das Axiallager 31 wird axial belastet. Wird das Spiel dieses Axiallagers 31 so weit vergrößert, daß sich die Antriebswelle 1 in eine axial kräftefreie Lage einstellen kann, so ist die gleichmäßige Lastverteilung auf die Stirnräder 5 und 6 wieder hergestellt. Das Maß der spielvergrößerung des Axiallagers 31 richtet sich im wesentlichen nach den unterschiedlichen elastischen Verspannungen, die am Ende der Rutschphase der Reibungskupplungen 7 und 14 bzw. 19 und 20 in den Getriebeteilzügen 5, 7, 8 und 6, 14, 15 bzw. 5, 21, 19, 22 und 6, 23, 20, 24 vorliegen. Die Umstellung des Axiallagers 31 vom normalen oder kleinsten auf das vergrößerte Axialspiel wird erst vorgenommen, wenn die Rutschphase der Reibungskupplungen beendet ist.

Anstelle von Reibungskupplungen können auch formschlüssige Kupplungen, insbesondere sog. Zahnkupplungen und Klauenkupplungen, verwendet werden. Dabei findet im wesentlichen der gleiche Funktionsablauf statt wie bei den zuvor beschriebenen Reibungskupplungen. Ein Unterschied ergibt sich jedoch dadurch, daß in parallelen Getriebezügen angeordnete formschlüssige Kupplungen, infolge von Toleranzunterschieden, nicht alle gleichzeitig zum Schließen gebracht werden können. Dadurch wird normalerweise zunächst nur eine der formschlüssigen Kupplungen schließen, während die andere Kupplung noch nicht geschlossen hat. Dieser anderen Kupplungen muß nun durch eine Relativdrehung der beiden Kupplungsteile der Schließvorgang ermöglicht werden. Dies wird gemäß der Erfindung durch Vergrößerung des genannten Axialspieles auf das Betriebsspiel ermöglicht. Deshalb muß bei formschlüssigen Kupplungen das Spiel der Lagervorrichtung von dem genannten minimalen Spiel bei offenen Kupplungen bereits dann auf das größere Betriebsspiel eingestellt werden, wenn nur eine der formschlüssigen Kupplungen geschlossen hat.

Der Grundgedanke der Erfindung besteht darin, für verschiedene Betriebszustände des Getriebes verschiedene Lagerspielräume zu verwenden, um dadurch in allen Getriebezügen, die Kupplungen aufweisen, gleich große Drehmomente zu erzeugen, wie dies bei Getriebezweigen ohne Kupplungen der Fall ist.

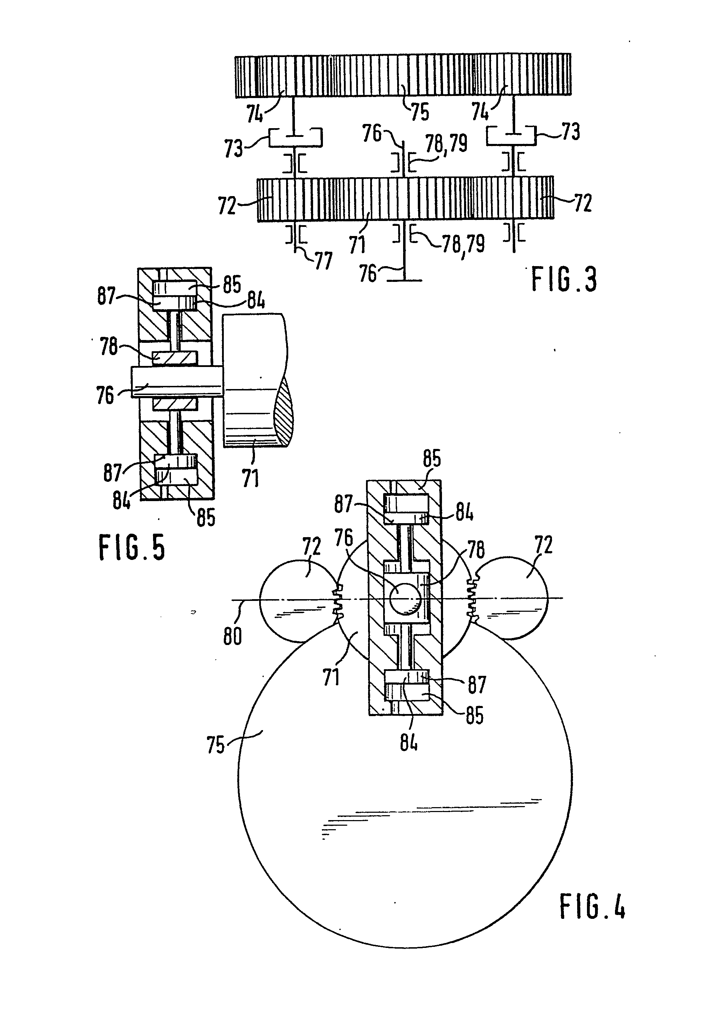

So zeigen die Fig. 3, 4 und 5 ein Getriebe mit einem Antriebsritzel 71, in das zwei Zahnräder 72 eingreifen, von denen jedes Rad über eine schaltbare Kupplung 73, beispielsweise Reibungskupplungen, mit einem weiteren Ritzel 74 verbindbar ist, welches seinerseits in ein Abtriebszahnrad 75 eingreift. Die Wellen 76 und 77 des Antriebsritzels 71 und der beiden darin eingreifenden Zahnräder 72 sind parallel und liegen im wesentlichen in einer Ebene 80. Die Antriebswelle 76 ist zu beiden Seiten des Antriebsritzels 71 in einem Radiallager 78 gelagert, das in einer Verschiebeführung 79 senkrecht zur theoretischen Ebene 80 verschiebbar ist. Die verschiebemöglichkeit des Antriebsritzels 76 wird in der Ausgangslage, die in den Fig. 3 bis 5 gezeigt ist, beispielsweise durch radial zur Welle 76 entgegengesetzt zueinander angeordnete Kolben 84 in Hydraulikzylindern 85 auf Null begrenzt. Wenn das Ritzel 71 für die Verschiebung freigegeben wird, um entsprechend dem Betriebsspiel verschoben werden zu können, dann werden die Hydraulikzylinder 85 drucklos geschaltet. Der mögliche Kolbenhub ist um einen bestimmten Sicherheitsbetrag größer als der Verschiebeweg, der im praktischen betrieb zu erwarten ist. Bei freigegebener Verschiebung wird die Achslage des Antriebsritzels 71 einerseits durch die Verschiebeführung und andererseits durch die Zahneingriffe mit den beiden Zahnrädern 72 bestimmt. Die Ritzelwelle 76 ist daher nach wie vor parallel zu den beiden Wellen 77 der Zahnräder 72, jedoch nicht mehr genau in der Ebene dieser beiden Zahnradwellen 77.

Die Verschiebung des Antriebsritzels 71 aus der Anfangslage mit Spiel Null in eine Betriebslage innerhalb des Betriebsspiels hat eine geringe Ungleichheit der Zahnkräfte in seinen beiden Zahneingriffen bei den Zahnrädern 72 zur Folge. Bei den in der Praxis zu erwartenden geringen Verschiebungen wirken sich diese unterschiedlichen Zahnkräfte jedoch nicht nennenswert auf die Leistungsverzweigung aus.

Bei freigegebener Verschiebung sind in der Null-Lage des Antriebsritzels 71 beide Zahnkräfte zu den Zahnrädern 72 gleich groß, sofern dabei das Gewicht des Antriebsritzels 71 vernachlässigt wird. Dieser Betriebszustand ergibt den Hauptvorteil der Erfindung, nämlich gleich große Drehmomentaufteilung auf beide Räder 72. Der Gewichtseinfluß des Antriebsritzels 71 läßt sich dann ausschalten, wenn die Verschiebeführung 79 für das Lager 78 des Ritzels horizontal liegt. In diesem Falle ist also die durch die Wellen 76 und 77 des Ritzels 71 und der beiden darin eingreifenden Zahnräder 72 bestimmte Ebene 80 vertikal liegend.

Das Spiel mit dem Wert Null oder ein minimales Spiel der Antriebswelle 76 ergibt sich dann, wenn die Kolben 84 in den Zylindern 85 mit hydraulischem oder pneumatischem Druck beaufschlagt werden und dabei die Kolben 84 an Anschlägen 87 der Zylinder 85 anliegen. Um die genannte Verschiebung der Antriebswelle 76 innerhalb der Verschiebeführung 79 zu gestatten, werden die Zylinder 85 in einen drucklosen Zustand gebracht. Die Verschiebung der Antriebswelle 26 ergibt sich dann bei der Verwendung von Reibungskupplungen von selbst infolge des Ausgleiches der unterschiedlichen elastischen Verspannungen der über die beiden Kupplungen 73 laufenden Leistungszweige. Diese unterschiedlichen Verspannungen sind eine Folge der Drehmomentunterschiede, mit denen erfahrungsgemäß beim Erreichen des Synchronzustandes zwischen den beiden Kupplungen zu rechnen ist.

Bei der Verwendung von formschlüssigen Kupplungen (Zahnkupplungen oder Klauenkupplungen) muß die Verschiebung der Antriebswelle 76 in der Verschiebeführung 79 den Verdrehungsunterschied in den beiden Leistungszweigen 72, 73, 74 ausgleichen, der zwischen dem Ausgangszustand « 1. Kupplung eingekuppelt, 2. Kupplung offen » und dem Endzustand « beide Kupplungen eingekuppelt » besteht.

Zusammenfassend läßt sich sagen, daß die Welle 76 des Antriebsritzels 71 in bestimmten Betriebszuständen vertikal zur genannten Ebene 80 frei verschieblich ist. Hinsichtlich dieser Verschiebung gilt :

1. Verschiebung ist Null,
   a) bei offenen Kupplungen,
   b) in der Rutschphase von Reibkupplungen, und
   c) beim Schließen der ersten formschlüssigen Kupplung ;

2. die Verschiebung ist freigegeben,
   a) bei geschlossenen Reibkupplungen und
   b) beim Schließen der zweiten formschlüssigen Kupplung.

**Ansprüche**

1. Getriebe mit einem Antriebsritzel (2, 71) und mindestens zwei von diesem angetriebenen Getriebezügen, die jeweils ein mit dem Antriebsritzel in Eingriff stehendes Zahnrad (56, 72) und eine schaltbare Kupplung (7, 14, 19, 20, 73) enthalten und über diese Kupplungen ein gemeinsames Abtriebsrad (9, 75) antreiben, und mit einer Lagervorrichtung (31, 78, 84, 85) für das Antriebsritzel, dadurch gekennzeichnet, daß das Lager (37, 78) der Lagervorrichtung des Antriebsritzels (2, 71) ein in Abhängigkeit vom Schaltzustand der Kupplungen (7, 14, 19, 20, 73) verstellbares Spiel — Spiel im Lager (31) oder Spiel des Lagers (78) in einer das Lager haltenden Führung (79) — aufweist, und daß das Antriebsritzel (2, 71) zum Zwecke des Lastausgleichs zwischen den Getriebezügen (5, 8, 9, 6, 15, 9, 72, 73, 74, 75) von der Lagervorrichtung (31, 78, 84, 85) bei geöffnetem Zustand aller Kupplungen (7, 14, 19, 20, 73) und während des Kupplungsvorganges mit einem minimalen Spielraumwert geführt ist und dieses Antriebsritzel bei vollständig geschlossenem Zustand mindestens einer der Kupplungen dann mit vergrößertem Spielraumwert geführt ist.

2. Getriebe nach Anspruch 1, dadurch gekennzeichnet, daß der kleinste Spielraumwert durch eine äußere Hilfskraft (50) gehalten wird und daß sich der vergrößerte Spielraumwert ohne Hilfskraft nur durch Verschiebung der Ritzelwelle (1) infolge des Getriebebelastungsdruckes ergibt.

3. Getriebe nach Anspruch 1 oder 2, dadurch gekennzeichnet, daß das Antriebsritzel (2, 71) doppelschrägverzahnt ist, dessen Einzelverzahnungen gleiche Schrägungswinkel entgegengesetzter Richtung besitzen und mit je einem einfachschrägverzahnten Stirnradkämmen, wobei das Antriebsritzellager ein einstellbares Axiallager (31) ist.

4. Getriebe nach Anspruch 1 oder 2, dadurch gekennzeichnet, daß die Achsen des Antriebsritzels (2, 71) und der darin eingreifenden Zahnräder parallel und im wesentlichen in einer Ebene liegen, wobei das Antriebsritzellager (78) ein senkrecht zur genannten Ebene (80) verstellbares Radiallager ist.

**Claims**

1. Gearing with a driving pinion (2, 71) driving at least two gear trains which each comprise a gear-wheel (56, 72) in engagement with the driving pinion and a releasable coupling (7, 14, 19, 20, 73), the gear trains driving a common driven wheel (9, 75) through these couplings and the gearing including a bearing arrangement (31, 78, 84, 85) for the driving pinion, characterised in that the bearing (37, 38) of the bearing arrangement of the driving pinion (2, 71) has a clearance (play in the bearing (31) or play of the bearing (78) in a guide (79) holding the bearing) which is adjustable in dependence upon the operative state of the couplings (7, 14, 19, 20, 73), and that, for the purpose of load equalisation between the gear trains (5, 8, 9, 6, 15, 9, 72, 73, 74, 75), the driving pinion (2, 71) is run at minimum clearance value by the bearing arrangement (31, 78, 84, 85) when all couplings (7, 14, 19, 20, 73) are in the disengaged condition and during the coupling process and this driving pinion is run at an enlarged clearance value in the fully-engaged condition of at least one of the couplings.

2. Gearing according to claim 1, characterised in that the smallest clearance value is maintained by an external auxiliary force (50) and that the enlarged clearance without auxiliary force is provided only by movement of the pinion shaft (1) as a result of the gearing load pressure.

3. Gearing according to claim 1 or 2, characterised in that the driving pinion (2, 71) is double bevel-geared, the individual gearings of which pinion have the same angle and the opposite direction of inclination and each have singly-inclined spurwheel gearings, the driving pinion bearing being an adjustable axial bearing (31).

4. Gearing according to claim 1 or 2, characterised in that the axes of the driving pinion (2, 71) and the gearwheels in engagement therewith lie parallel and essentially coplanar, the driving pinion bearing (78) being a radial bearing adjustable perpendicularly to the said plane (80).

## Revendications

1. Engrenage comportant un pignon d'entraînement (2, 71) et au moins deux trains d'engrenage entraînés par ce dernier qui comprennent chacun une roue dentée (56, 72) engrenant avec le pignon d'entraînement et un embrayage (7, 14, 19, 20, 73) et commandant, à travers ces embrayages, une roue de sortie commune (9, 75) et un dispositif de support (31, 78, 84, 85) pour le pignon d'entraînement, caractérisé par le fait que le palier (37, 78) du dispositif de support du pignon d'entraînement (2, 71) présente un jeu réglable en fonction de l'état d'engagement des embrayages (7, 14, 19, 20, 73) — jeu dans le support (31) ou jeu du support (78) dans un guidage (79) supportant le palier — et que le pignon d'entraînement (2, 71) est guidé, aux fins de compenser la charge entre les trains d'engrenage (5, 8, 9, 6, 15, 9, 72, 73, 74, 75), par le dispositif de support (31, 78, 84, 85) en état ouvert de tous les embrayages (7, 14, 19, 20, 73) et pendant l'opération d'embrayer avec une valeur mini. de jeu et que ce pignon d'entraînement dans l'état complètement fermé d'un des embrayages au moins, sera guidé avec une valeur augmentée de jeu.

2. Engrenage suivant la revendication 1, caractérisé par le fait que la valeur mini. de jeu est maintenue par une force auxiliaire extérieure (50) et que la valeur augmentée du jeu résulte sans force auxiliaire seulement par déplacement de l'arbre de pignon (1) en raison de la force de charge de l'engrenage.

3. Engrenage suivant les revendications 1 ou 2, caractérisé par le fait que le pignon d'entraînement (2, 71) est denté et que ses dentures individuelles possèdent des angles d'hélice identiques de direction opposée et que chacune engrène avec une roue droite hélicoïdale simple, le palier du pignon d'entraînement étant un palier axial réglable (31).

4. Engrenage suivant les revendications 1 ou 2, caractérisé par le fait que, les essieux du pignon d'entraînement (2, 71) et des roues dentées y engrenant se trouvent en position parallèle et essentiellement dans le même plan, le palier du pignon d'entraînement (78) étant un palier radial réglable verticalement par rapport au plan mentionné (80).

FIG.1

FIG. 2

FIG.3

FIG.5

FIG.4